# EUROPEAN PATENT SPECIFICATION

(11) **EP 4 144 569 B1**
(45) Date of publication and mention of the grant of the patent: **07.05.2025**
(21) Application number: 21194567.0
(22) Date of filing: 02.09.2021
(51) Int. Cl.: B60L 50/64, H01M 10/48, H01M 10/613, H01M 10/63, H01M 10/6568, G01R 31/00, H01M 10/42

(54) **METHOD OF DETECTING AN OPERATING CONDITION OF A BATTERY SYSTEM, WHICH MAY LEAD TO A THERMAL RUNAWAY**
VERFAHREN ZUR DETEKTION EINES BETRIEBSZUSTANDES EINES BATTERIESYSTEMS, DAS ZU THERMISCHEM DURCHGEHEN FÜHREN KANN
PROCÉDÉ DE DÉTECTION D'UN ÉTAT DE FONCTIONNEMENT D'UN SYSTÈME DE BATTERIE POUVANT DONNER LIEU À UN EMBALLEMENT THERMIQUE

(43) Date of publication of application: 08.03.2023
(73) Proprietor: Samsung SDI Co., Ltd., Yongin-si, Gyeonggi-do 17084 (KR)
(72) Inventor: Golubkov, Andrej, 8010 Graz (AT)
(74) Representative: Gulde & Partner

(56) References cited:
- EP-A1- 3 654 442
- CN-A- 113 274 669
- US-A1- 2015 191 101

## Description

### Field of the Disclosure

The present invention relates to a method of detecting an abnormal operating condition of a battery system, which may lead to a thermal runaway. The present invention further refers to a battery system, which is configured to perform the afore-mentioned method, and to an electric vehicle including said battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries comprise an electrode assembly including a positive electrode, a negative electrode, and a separator interposed between the positive and negative electrodes, a case receiving the electrode assembly, and electrode terminals electrically connected to the electrodes of the electrode assembly. An electrolyte solution is injected into the case in order to enable charging and discharging. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for electric motor propulsion of vehicles. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure an arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*).

A battery pack is a set of any number of (preferably identical) battery modules. They may be configured in a series, parallel or a mixture of both to deliver the desired voltage, capacity, or power density. Components of battery packs include the individual battery modules and the interconnects, which provide electrical conductivity between them.

A battery system further includes a battery management system (BMS), which is any electronic system that manages the rechargeable battery cells, battery modules and battery pack, such as by protecting the battery cells from operating outside their safe operating area, monitoring their states, calculating secondary data, reporting that data, controlling its environment, authenticating it and/or balancing it. For example, the BMS may monitor the state of the battery pack, battery modules or battery cells as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

The performance of lithium-ion batteries is highly dependent on the proper maintenance of cell temperature. Therefore, an effective thermal management is critical to achieve maximum performance when operating under various environmental conditions. Generally, the thermal management focuses on cooling or heating the battery cells, thermally insulating of battery cells, battery modules and battery pack, as well as ensuring effective heat emission, dissipation and distribution in the battery pack. The thermal management may be controlled by the BMS and, when properly performed, may ensure safety, and maximize life expectancy, available power and battery capacity.

The initial heating may also be caused by a local failure, such as a cell internal short circuit, heating from a defect electrical contact, short circuit to a neighboring cell. When a battery cell is heated above a critical temperature (typically above 150°C) it can transit into a thermal runaway. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. During the thermal runaway, a failed battery cell, i.e., a battery cell which has a local failure, may reach a temperature exceeding 700°C. The battery pack will sustain high damage and the vehicle passenger may be endangered. Examples for detecting such thermal runaways may be found in US 2015/191101 A1, EP 3 654 442 A1 and CN 113 274 669 A.

It may be therefore advantageous to detect for example over-temperature of a failed battery cell as early as possible. However, equipping each battery cell with its own temperature sensor is expensive in manufacturing, complicates maintenance and requires sufficient installation space.

### Summary of Invention

The invention is defined by the appended claims. The description that follows is subjected to this limitation.

According to an aspect of the present invention, there is provided a method of detecting an abnormal operating condition of a battery system, which may lead to a thermal runaway. The battery system, which performs the detection method, comprises: a battery pack including a plurality of battery cells; a cooling system including a pump for circulating a liquid coolant in a cooling circuit, a first heat exchange member integrated into the cooling circuit and thermally contacting the battery cells, and at least one pressure sensor adapted to detect a change in pressure inside the cooling circuit; and a battery management system, BMS, being connected to the pressure sensor and the pump and being configured to perform a detection mode for detecting an abnormal operating condition of the battery system.

The detection mode includes the steps of: step a) detecting an initial pressure with the pressure sensor and switching off the pump for a specified time period, step b) after switching off the pump, capturing the pressure with the pressure sensor, and step c) determining a pressure difference between the initial pressure and the captured pressure and, when the pressure difference exceeds a predetermined threshold, detecting an abnormal condition that could cause the occurrence of a thermal runaway of the battery pack.

According to another aspect of the present invention, there is provided a battery system, comprising: a battery pack including a plurality of battery cells; a cooling system including a pump for circulating a liquid coolant in a cooling circuit, a first heat exchange member integrated into the cooling circuit and thermally contacting the battery cells, and at least one pressure sensor adapted to detect a change in pressure inside the cooling circuit; and a battery management system, BMS, being connected to the pressure sensor and the pump and being configured to perform a detection mode for detecting an abnormal operating condition of the battery system.

The implemented detection mode includes the steps of: step a) detecting an initial pressure with the pressure sensor and switching off the pump for a specified time period, step b) after switching off the pump, capturing the pressure with the pressure sensor, and step c) determining a pressure difference between the initial pressure and the captured pressure and, when the pressure difference exceeds a predetermined threshold, detecting an abnormal condition that could cause the occurrence of a thermal runaway of the battery pack.

Yet another aspect of the present invention refers to an electric vehicle including the afore-mentioned battery system.

Further aspects of the present invention could be learned from the dependent claims or the following description.

### Brief Description of the Drawings

Features will become apparent to those of ordinary skill in the art by describing in detail exemplary embodiments with reference to the attached drawings in which:
Fig. 1 schematically illustrates a battery system according to an embodiment of the present disclosure.
Fig. 2 is a flow chart illustrating a method for detecting an abnormal operating condition, which may lead to a thermal runaway.
Fig. 3(a) schematically illustrates the course of pressure during a detection mode for identifying an abnormal condition in case that one or more of the battery cells of the battery system show the phenomena of over-temperature, whereas Figure 3(b) shows the course of pressure without any over-temperature of battery cells.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure".

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

### General Concept

According to an aspect of the present disclosure, there is provided a method of detecting an abnormal operating condition of a battery system, which may lead to a thermal runaway. The battery system, which performs the detection method, comprises, a battery pack including a plurality of battery cells, a cooling system including a pump for circulating a liquid coolant in a cooling circuit, a first heat exchange member integrated into the cooling circuit and thermally contacting the battery cells, and at least one pressure sensor adapted to detect a change in pressure inside the cooling circuit, and a battery management system, BMS, being connected to the pressure sensor and the pump and being configured to perform a detection mode for detecting an abnormal operating condition of the battery system.

The detection mode includes the steps of: step a) detecting an initial pressure with the pressure sensor and switching off the pump for a specified time period, step b) after switching off the pump, capturing the pressure with the pressure sensor, and step c) determining a pressure difference between the initial pressure and the captured pressure and, when the pressure difference exceeds a predetermined threshold, detecting an abnormal condition that could cause the occurrence of a thermal runaway of the battery pack.

In other words, the battery system could be run under a specific mode for improving the detection of an operating state of the battery system, which may lead to the occurrence of a thermal runway. Specifically, a pressure sensor is integrated into the cooling circuit and is configured to determine a pressure or pressure change of a liquid coolant at least during the detection mode. The cooling system for circulating the liquid coolant in the cooling circuit comprises a pump, which may be switched on and off by the BMS. The cooling circuit or at least a part of the cooling circuit in which the heat exchange member and the pressure sensor are assembled is a closed system without pressure compensation means. Further, a first heat exchange member, such as a cooling plate, is integrated into the cooling circuit and thermally contacts the battery cells for cooling. The BMS may initiate measurement of the coolant pressure by the pressure sensor in the detection mode and the measured values will be transmitted from the pressure sensor to the BMS. During the detection mode, the pump is switched off and the initial pressure is detected with the pressure sensor (step a)). The pump will be switched off for a specified time period and then switched on again. Any change of the pressure during said time period will be detected by the pressure sensor (step b)). If the pressure or pressure increase exceeds a specified limit, the BMS evaluates this event as an indication for an abnormal operation condition of at least one battery cell of the battery pack (step c)). In this case, safety routines or countermeasures can be taken to avoid a thermal runaway.

The above-mentioned detection method is based on the finding that the coolant pressure may raise significantly in case of over-temperature of one or more secondary batteries of the battery pack. In normal operation conditions, lithium ion battery cells are designed to work at temperature not exceeding, for example, 80°C. In case of over-temperature due to failure of a battery cell the temperature may reach or exceed the boiling temperature of the coolant, which is, for example, water. In other words, a hot spot may be formed inside the cooling circuit adjacent to the place where thermal contact with the failed cell is established. At the hot spot, a part of the coolant will be evaporated and the evaporated coolant will form bubbles causing an increase of pressure within the cooling circuit. However, the evaporated coolant may condensate again inside the cooling circuit, when the coolant is conveyed further by the pump and leaves the hot spot. Thus, the amount of coolant vapor will also depend on the coolant throughput through the hot spot. At high flow rate of the coolant, less vapor will exist at any time, because the coolant spends less time in the hot spot area and any coolant vapor will condensate faster since it is quickly transported away from the hot spot area. During the detection mode, the coolant pump is therefore switched off causing a larger amount of coolant to evaporate in case of a hot spot, which furthermore causes a more significant increase of the detected pressure. In addition, the measured value is not superimposed by the periodic pressure increase due to pumping. As a consequence, the disclosed detection mode significantly increases the sensitivity for detecting over-temperature of battery cells.

The disclosed indirect method for detecting cell over-temperature may be used in combination with other safety routines implemented in the BMS to improve the overall reliability of over-temperature detection, respectively detection of an abnormal condition, which may lead to a thermal runway. Due to the indirect detection of over-temperature, it may not be necessary to equip each battery cell with its own temperature sensor and the manufacturing costs of the battery pack will be significantly lowered.

A pressure value may be detected continuously or along with initiating the detection mode. What is important is that at the beginning of the detection mode an initial pressure value of the coolant is read by the BMS (step (a)). The initial pressure value could be read directly with initiating the detection mode or with a short delay in time after switching off the pump to avoid pressure changes due to a drop in pumping pressure.

In step b) of the detection mode, the initial pressure of the coolant is detected by the pressure sensor while the pump is switched off for a specified time period. Said time period depends on the specific configuration of the battery system and needs to be adapted for each specific application. Factors that can influence the duration of the time window may include, for example, the boiling point of the coolant, the cooling performance of the cooling system, sensitivity and localization of the pressure sensor, and safety requirements. Generally, the time period is set at least such that a significant increase of pressure could be expected in case of an over-temperature of a battery cell. The maximum duration must comply with the safety requirements of the battery system, i.e. cooling should not be interrupted for such a long time that overheating of battery cells occurs. Usually, the detection mode may be upheld for a period between 10 seconds to 60 seconds and then the pump will be switched on again.

The specified time period may be preset at the beginning of the detection mode. It can be a predetermined period of time or the period of time is calculated or specified by taking other operating parameters of the battery system into account when the detection mode is initiated. For example, the period of time may be specified in dependency from the actual coolant temperature. At a lower coolant temperature, the period of time could be extended so as to ensure sufficient coolant evaporation at local hot spots. In case the pressure is continuously captured by the BMS, the pumping may immediately be resumed when the pressure or increase of pressure exceeds a predetermined threshold, i.e. the pumps are immediately switched on for safety reasons even before the end of the specified time period.

In step c), the pressure difference between the initial pressure value and the captured pressure is determined by the BMS. When the pressure difference exceeds a predetermined or specified threshold, an abnormal condition that could cause the occurrence of a thermal runaway of the battery pack is indicated. Said threshold or pressure limit depends on the specific configuration of the battery system and needs to be adapted for each specific application. Factors that can influence the threshold may include, for example, the kind of liquid coolant as well as sensitivity and localization of the pressure sensor. Generally, the threshold is set at least such that any increase in pressure purely due to thermal expansion of the liquid is excluded. In other words, the threshold should reflect a pressure increase due to evaporation of coolant.

As already mentioned above, supplemental safety routines for detection of an abnormal condition leading to a thermal runaway may be combined with the detection mode according to the present disclosure. Such supplemental safety routines may include (i) BMS subroutines for calculation of the likelihood of occurrence of a thermal runaway and/or (ii) controlling of at least one other parameter of the battery system besides the pressure within the cooling circuit. For example, the following events may also indicate an abnormal condition: exceeding a temperature limit inside the housing, exceeding a coolant temperature, detection of a crash, detection of an abnormal voltage of one or more battery cells, detection of over-current of the battery pack, and detection of an abnormal gas-compositions within the housing.

Suitable parameters and threshold values for determination of abnormal conditions depend on the specific configuration of the battery system and need to be adapted for a specific application. For example, a coolant temperature may be measured by a temperature sensor. If the temperature exceeds, for example, 70°C, the BMS may initiate the disclosed detection mode. Or a crash sensor may detect a crash of a vehicle containing the battery system with another object. The detected crash may cause the BMS to initiate the detection mode. Also, a detected abnormal voltage of battery cells or over-current of the battery pack may initialize the BMS to activate the detection mode. Further, gas sensors within the housing of the battery pack may detect abnormal gas-composition indicating damage of a battery cell, which also causes starting the detection mode.

Besides controlling one or more of the specified parameters, the BMS may include in alternative or in addition an algorithm for determination of a state of safety, SOS (see for example E. Cabrera-Castillo et al., Journal of Power Sources, volume 324, pages 509-520). SOS may calculate likelihood levels for a failure of the battery system. Thus, exceeding a given likelihood level may indicate an abnormal condition and, as a consequence, the BMS may initiate countermeasures or safety routines to avoid or at least reduce the harmful effects of a thermal runaway. Thus, measurement of pressure change within the cooling circuit according to the above detection mode may provide another suitable parameter for SOS.

According to another aspect of the present disclosure, there is provided a battery system comprising a battery pack including a plurality of battery cells. The battery system further includes a cooling system including a pump for circulating a liquid coolant in a cooling circuit, a first heat exchange member integrated into the cooling circuit and thermally contacting the battery cells, and at least one pressure sensor adapted to detect a change in pressure inside the cooling circuit. The battery system also involves a battery management system, BMS, being connected to the pressure sensor and the pump by signal lines. The BMS is also configured to perform a detection mode as defined above for detecting an abnormal operating condition of the battery system.

In the battery system the pump may be arranged in the cooling circuit upstream to the first heat exchange member, for example a cooling plate, and the pressure sensor is arranged in the cooling circuit downstream the first heat exchange member. Thereby, pressure changes solely caused by a drop in pumping pressure, when the pump is switched off, may be lowered. For example, the pressure sensor may be placed near the inlet side of the pump, so that the pressure increase, which is caused by the pump and the flow resistance of the components in the coolant circuit, does not intervene with the measurement conditions during the detection mode.

Yet another aspect of the present disclosure refers to an electric vehicle including the afore-mentioned battery system.

### Specific Embodiments

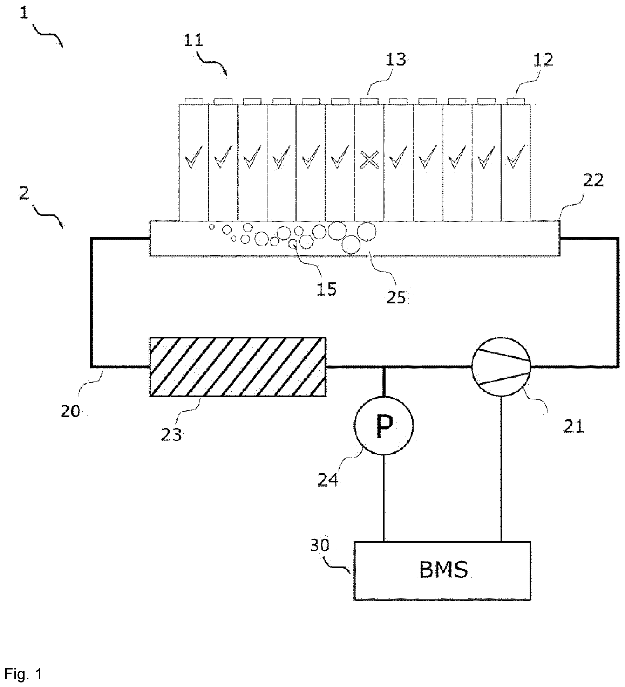

Fig. 1 schematically illustrates a battery system 1 according to an embodiment of the present disclosure. The battery system 1 may be a compound of an electric vehicle and includes a battery pack 11 comprising a row of lithium secondary battery cells 12, 13 being assembled on a first heat exchange member 22. In the row of battery cells, battery cell 13 is in an abnormal condition (also indicated by an X) which may lead to the occurrence of a thermal runway, whereas all the other battery cells 12 remain in a safe operation condition (also indicated by the hooks).

The first heat exchange member 22 is part of a cooling system 2 including also a pump 21 for circulating a liquid coolant, such as water, in a cooling circuit 20, i.e. the coolant flow is driven by the pump 21. Here, the first heat exchange member 22 is designed as a cooling plate and the bottom sides of the battery cells 12, 13 are thermally in contact with the cooling plate. The cooling plate is cooled by the liquid coolant which flows inside channels 25 through the cooling plate. According to the exemplary embodiment, a second heat exchange member 23 is provided downflow the first heat exchange member 22 in the cooling circuit 20 and allows heat-exchange with the ambient.

The cooling system 2 further includes a pressure sensor 24 adapted to detect a change in pressure inside the cooling circuit 20. The pressure sensor 24 is placed near an inlet side of the pump 21, so that a pressure increase, which is caused by the pump 21 and a flow resistance of the components in the coolant circuit 20, does not negatively intervene the measurement conditions during a detection mode, which will be described in more detail below.

The battery system 1 further includes a battery management system, BMS, 30 being connected to the pressure sensor 24 and the pump 21 by signal lines. The BMS 30 is configured to perform a detection mode for detecting an abnormal operating condition of the battery system 1. During the detection mode, bubbles 15 may occur by evaporation of the liquid coolant resulting in an increase of pressure, which could be detected by the pressure sensor 24.

The BMS 30 is any electronic system that manages the battery pack 11, such as by protecting the battery cells 12, 13 from operating outside their safe operating area, monitoring their states, calculating secondary data, reporting that data, controlling its environment, authenticating it and/or balancing it. For example, the BMS 30 may monitor the state of the battery pack 11 as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, the BMS 30 may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage). For simplifying the function of the BMS 30, the exemplary embodiment refers only the specific detection mode using pressure sensor 24, which measures a pressure within the cooling circuit 20 and provides measurement data to the BMS 30. However, other sensed parameters or calculated values may - if combined with the outcome of the present detection mode - also be useful for determination of the occurrence of a thermal runaway.

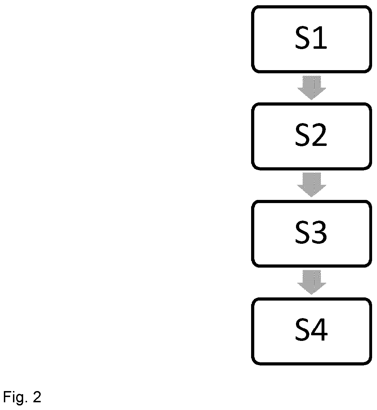

Fig. 2 is a flow chart illustrating the process of detecting an abnormal operating condition, which may lead to a thermal runaway, in the exemplary battery system illustrated in Figure 1.

In step S1, the BMS 30 switches into a detection mode. Switching into the detection mode may be caused by a subroutine implemented into the BMS 30. Said subroutine may initiate the detection mode in dependency of predefined time periods. In alternative or addition, other operation conditions may initiate the detection mode. For example, if the coolant temperature increases to 70 °C, the subroutine may initiate the detection mode.

In step S2, the pump 21 is switching off for a specified time period and an initial pressure is detected by the pressure sensor 24. Sensing the initial pressure may be achieved directly after switching of the pump 21 or after a short delay of time, for example 5 seconds.

In step S3, the pressure is continuously captured with the pressure sensor 24 during the switch off period of the pump 21. A pressure difference between the initial pressure value and the captured pressure is determined by the BMS 30. The pressure difference is compared with a specified threshold and if the captured pressure exceeds the predetermined threshold, an abnormal condition that could cause the occurrence of a thermal runaway of the battery pack 11 is indicated by the BMS 30.

In step S4, the BMS 30 may switch back to ordinary operation conditions when the captured pressure does not exceed the specified threshold and may among others switch on the pump 21. However, in the contrary situation the BMS 30 may immediately initiate safety routines or countermeasures to avoid or at least lessen a thermal runaway of single battery cells 12, 13.

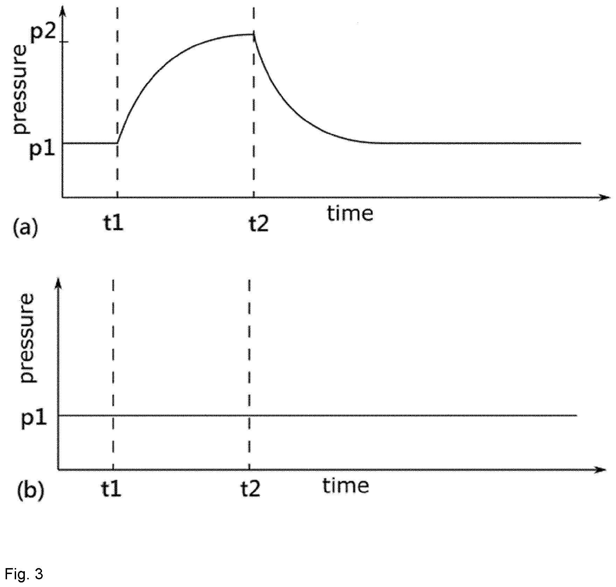

Figure 3(a) schematically illustrates the course of pressure during the detection mode for identifying an abnormal condition, when a battery cells of the battery system show the phenomena of over-temperature, whereas in the battery system of Figure 3(b) none of the battery cells shows an over-temperature. More precisely, the battery system 1 as illustrated in Figure 1 includes a failed battery cell 13 which temperature exceeds normal conditions, i.e. the temperature of said battery cell 13 is significantly higher than it should be under usual operation conditions of the battery system 1. As long as the liquid coolant is pumped through the coolant circuit 20, the pressure is not significantly changed since the failed battery cell 13 is continuously cooled by the flow of coolant and any evaporated coolant may condensate.

However, when the detection mode is initiated by the BMS 30 - may it as a routine measure or due to another parameter detected by the BMS 30 that indicates an abnormal condition - the pump 21 is switched off for a time period between time point t1 and time point t2. As a consequence, a hot spot is formed at the location where the failed battery cell 13 is in thermal contact with the coolant circuit 20. When the temperature of the hot spot exceeds the boiling temperature of the coolant, bubbles 15 will be formed. The initially detected pressure p1 will raise within the coolant circuit 20. At time point t2, the captured pressure p2 is significantly higher compared to the initial pressure p1 at time point t1. The pressure will decrease, when the pump 21 is switched on as far as the failed battery cell 13 does not change to the state of thermal runaway. If the pressure difference between the initial pressure p1 and the captured pressure p2 exceeds a predetermined threshold, the BMS 30 will indicate an abnormal condition. Hence, the detection mode indirectly provides information about an upcoming thermal runaway and safety routines or countermeasures can be taken by the BMS 30 to avoid such critical situation.

For comparison, Figure 3(b) shows the course of pressure detected by the pressure sensor 24 when none of the battery cells 12 is in condition of over-temperature. Pressure p2 at time point t2 equals the initial pressure p1 at time point t1.

### Reference signs

- 1: battery system
- 2: cooling system
- 11: battery pack
- 12: battery cells
- 13: failed battery cell
- 15: bubbles
- 20: cooling circuit
- 21: pump
- 22: first heat exchange member
- 23: second heat exchange member
- 24: pressure sensor
- 25: channel
- 30: battery management system, BMS

## Claims

1. A method of detecting an abnormal operating condition of a battery system (1), which may lead to a thermal runaway, wherein the battery system (1) comprises:
a battery pack (11) including a plurality of battery cells (12, 13);
a cooling system (2) including a pump (21) for circulating a liquid coolant in a cooling circuit (20), a first heat exchange member (22) integrated into the cooling circuit (20) and thermally contacting the battery cells (12, 13), and at least one pressure sensor (24) adapted to detect a change in pressure inside the cooling circuit (20); and
a battery management system, BMS, (30) being connected to the pressure sensor (24) and the pump (21) and being configured to perform a detection mode for detecting an abnormal operating condition of the battery system (1), the detection mode including the steps of:
step a) detecting an initial pressure with the pressure sensor (24) and switching off the pump (21) for a specified time period,
step b) after switching off the pump (21), capturing the pressure with the pressure sensor (24), and
step c) determining a pressure difference between the initial pressure and the captured pressure and, when the pressure difference exceeds a predetermined threshold, detecting an abnormal condition that could cause the occurrence of a thermal runaway of the battery pack (11).

2. A battery system (1), comprising:
a battery pack (11) including a plurality of battery cells (12, 13);
a cooling system (2) including a pump (21) for circulating a liquid coolant in a cooling circuit (20), a first heat exchange member (22) integrated into the cooling circuit (20) and thermally contacting the battery cells (12, 13), and at least one pressure sensor (24) adapted to detect a change in pressure inside the cooling circuit (20); and
a battery management system, BMS, (30), being connected to the pressure sensor (24) and the pump (21) and being configured to perform a detection mode for detecting an abnormal operating condition of the battery system (1), the detection mode including the steps of:
step a) detecting an initial pressure with the pressure sensor (24) and switching off the pump (21) for a specified time period,
step b) after switching off the pump (21), capturing the pressure with the pressure sensor (24), and
step c) determining a pressure difference between the initial pressure value and the captured pressure and, when the pressure difference exceeds a predetermined threshold, detecting an abnormal condition that could cause the occurrence of a thermal runaway of the battery pack (11).

3. The battery system according to claim 2, wherein the pump (21) is arranged in the cooling circuit (20) upstream to the first heat exchange member (22) and the pressure sensor (24) is arranged is in the cooling circuit (20) downstream the first heat exchange member (22).

4. An electric vehicle comprising the battery system according to claim 2.

## Patentansprüche

1. Verfahren zum Erkennen eines anormalen Betriebszustandes eines Batteriesystems (1), der zu einem thermischen Durchgehen führen kann, wobei das Batteriesystem (1) Folgendes umfasst:
ein Batteriepack (11), das eine Vielzahl von Batteriezellen (12, 13) umfasst;
ein Kühlsystem (2), das eine Pumpe (21) zum Umwälzen eines flüssigen Kühlmittels in einem Kühlkreislauf (20), ein erstes Wärmetauschelement (22), das in den Kühlkreislauf (20) integriert ist und die Batteriezellen (12, 13) thermisch kontaktiert, und mindestens einen Drucksensor (24) umfasst, der angepasst ist, um eine Druckänderung innerhalb des Kühlkreislaufs (20) zu erfassen; und
ein Batterieverwaltungssystem, BMS, (30), das mit dem Drucksensor (24) und der Pumpe (21) verbunden ist und konfiguriert ist, um einen Erkennungsmodus zum Erkennen eines anormalen Betriebszustands des Batteriesystems (1) durchzuführen, wobei der Erkennungsmodus die folgenden Schritte beinhaltet:
Schritt a) Erfassen eines Anfangsdrucks mit dem Drucksensor (24) und Abschalten der Pumpe (21) für eine bestimmte Zeitspanne,
Schritt b) Erfassen des Drucks mit dem Drucksensor (24) nach dem Abschalten der Pumpe (21), und
Schritt c) Bestimmen einer Druckdifferenz zwischen dem Anfangsdruck und dem erfassten Druck und, wenn die Druckdifferenz einen vorgegebenen Schwellenwert überschreitet, Erkennen eines anormalen Zustands, der das Auftreten eines thermischen Durchgehens des Batteriepacks (11) verursachen könnte.

2. Batteriesystem (1), umfassend:
ein Batteriepack (11), das eine Vielzahl von Batteriezellen (12, 13) umfasst;
ein Kühlsystem (2), das eine Pumpe (21) zum Umwälzen eines flüssigen Kühlmittels in einem Kühlkreislauf (20), ein erstes Wärmetauschelement (22), das in den Kühlkreislauf (20) integriert ist und die Batteriezellen (12, 13) thermisch kontaktiert, und mindestens einen Drucksensor (24) umfasst, der angepasst ist, um eine Druckänderung innerhalb des Kühlkreislaufs (20) zu erfassen; und
ein Batterieverwaltungssystem, BMS, (30), das mit dem Drucksensor (24) und der Pumpe (21) verbunden ist und konfiguriert ist, um einen Erkennungsmodus zum Erkennen eines anormalen Betriebszustands des Batteriesystems (1) durchzuführen, wobei der Erkennungsmodus die folgenden Schritte beinhaltet:
Schritt a) Erfassen eines Anfangsdrucks mit dem Drucksensor (24) und Abschalten der Pumpe (21) für eine bestimmte Zeitspanne,
Schritt b) Erfassen des Drucks mit dem Drucksensor (24) nach dem Abschalten der Pumpe (21), und
Schritt c) Bestimmen einer Druckdifferenz zwischen dem Anfangsdruckwert und dem erfassten Druck und, wenn die Druckdifferenz einen vorgegebenen Schwellenwert überschreitet, Erkennen eines anormalen Zustands, der das Auftreten eines thermischen Durchgehens des Batteriepacks (11) verursachen könnte.

3. Batteriesystem nach Anspruch 2, wobei die Pumpe (21) im Kühlkreislauf (20) stromaufwärts des ersten Wärmetauschelements (22) und der Drucksensor (24) im Kühlkreislauf (20) stromabwärts des ersten Wärmetauschelements (22) angeordnet ist.

4. Elektrofahrzeug, das das Batteriesystem nach Anspruch 2 umfasst.

## Revendications

1. Procédé de détection d'une condition de fonctionnement anormale d'un système de batterie (1), qui peut conduire à un emballement thermique, dans lequel le système de batterie (1) comprend :
un bloc-batterie (11) incluant une pluralité d'éléments de batterie (12, 13) ;
un système de refroidissement (2) incluant une pompe (21) pour faire circuler un liquide de refroidissement dans un circuit de refroidissement (20), un premier organe d'échange de chaleur (22) intégré dans le circuit de refroidissement (20) et en contact thermique avec les éléments de batterie (12, 13), et au moins un capteur de pression (24) conçu pour détecter un changement de pression à l'intérieur du circuit de refroidissement (20) ; et
un système de gestion de batterie, BMS, (30) étant connecté au capteur de pression (24) et à la pompe (21) et étant configuré pour appliquer un mode de détection pour détecter une condition de fonctionnement anormale du système de batterie (1), le mode de détection incluant les étapes suivantes :
étape a) la détection d'une pression initiale avec le capteur de pression (24) et l'arrêt de la pompe (21) pendant une période de temps spécifiée,
étape b) après l'arrêt de la pompe (21), la capture de la pression avec le capteur de pression (24), et
étape c) la détermination d'une différence de pression entre la pression initiale et la pression capturée et, lorsque la différence de pression dépasse un seuil prédéterminé, la détection d'une condition anormale qui pourrait entraîner l'apparition d'un emballement thermique du bloc-batterie (11).

2. Système de batterie (1), comprenant :
un bloc-batterie (11) incluant une pluralité d'éléments de batterie (12, 13) ;
un système de refroidissement (2) incluant une pompe (21) pour faire circuler un liquide de refroidissement dans un circuit de refroidissement (20), un premier organe d'échange de chaleur (22) intégré dans le circuit de refroidissement (20) et en contact thermique avec les éléments de batterie (12, 13), et au moins un capteur de pression (24) conçu pour détecter un changement de pression à l'intérieur du circuit de refroidissement (20) ; et
un système de gestion de batterie, BMS (30), étant connecté au capteur de pression (24) et à la pompe (21) et étant configuré pour appliquer un mode de détection pour détecter une condition de fonctionnement anormale du système de batterie (1), le mode de détection incluant les étapes suivantes :
étape a) la détection d'une pression initiale avec le capteur de pression (24) et l'arrêt de la pompe (21) pendant une période de temps spécifiée,
étape b) après l'arrêt de la pompe (21), la capture de la pression avec le capteur de pression (24), et
étape c) la détermination d'une différence de pression entre la valeur de pression initiale et la pression capturée et, lorsque la différence de pression dépasse un seuil prédéterminé, la détection d'une condition anormale qui pourrait entraîner l'apparition d'un emballement thermique du bloc-batterie (11).

3. Système de batterie selon la revendication 2, dans lequel la pompe (21) est agencée dans le circuit de refroidissement (20) en amont du premier organe d'échange de chaleur (22) et le capteur de pression (24) est agencé dans le circuit de refroidissement (20) en aval du premier organe d'échange de chaleur (22).

4. Véhicule électrique comprenant le système de batterie selon la revendication 2.
